# EUROPEAN PATENT SPECIFICATION

(11) **EP 4 632 669 B1**
(45) Date of publication and mention of the grant of the patent: **25.11.2026**
(21) Application number: 24175942.2
(22) Date of filing: 15.05.2024
(51) Int. Cl.: G06T 5/80, G06T 3/047

(54) **DISTORTION CORRECTION BASED ON FIRST COME FIRST SERVED**
VERZERRUNGSKORREKTUR AUF BASIS DER ERSTBEREITEN KOME
CORRECTION DE DISTORSION BASÉE SUR UN PREMIER COME DE PREMIER SERVI

(30) Priority: 12.04.2024 IN 202441029862
(43) Date of publication of application: 15.10.2025
(73) Proprietor: NXP B.V., 5656 AG Eindhoven (NL)
(72) Inventor: Subramanya Naidu, Sharath, 5656 AG Eindhoven (NL); Singh, Chanpreet, 5656 AG Eindhoven (NL); Babinec, Tomas, 5656 AG Eindhoven (NL); Pujari, Omkar Abhay, 5656 AG Eindhoven (NL); ., Sharath, 5656 AG Eindhoven (NL); Devre, Ashish Sanjaybhai, 5656 AG Eindhoven (NL); Singla, Ashish, 5656 AG Eindhoven (NL); Punj, Karan, 5656 AG Eindhoven (NL)
(74) Representative: Schwarzweller, Thomas

(56) References cited:
- US-A1- 2013 321 674
- US-B2- 11 270 416

## Description

### Technical Field

The technical field relates to a method and system for distortion correction from a distorted source image to a distortion-corrected target image. The technical field is applicable to, but not limited to, a first come first served approach for processing distorted images based on vertical stripes.

### Background of the invention

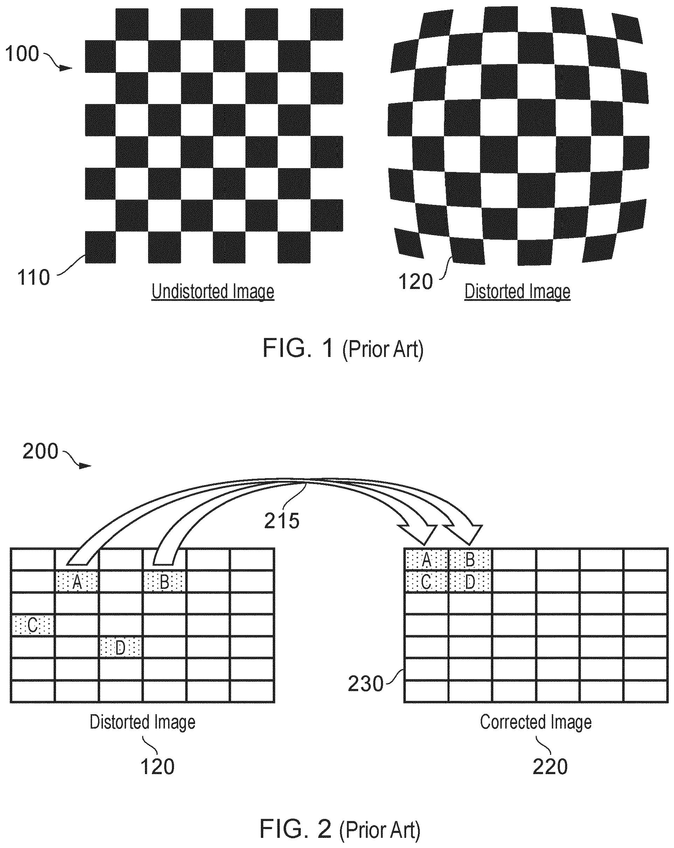

When an image is captured by a camera or other image sensors, the entire image or edges of the image are often distorted due to practical limitations of, say, a camera lens or the image sensor. This is often referred to as geometric distortion and various technologies have been developed to correct such a distorted image. It is known that lens curvature and magnification properties at different field-of-view (FOV) points can lead to straight lines being represented as curved lines, especially with a wide-angle lens, such as a fisheye lens. FIG. 1 illustrates a simplified representation 100 of both a geometrically distorted image 120, e.g. a source image, and an undistorted image 110, e.g., a distortion-corrected target image, that comprises the same grid as the geometrically distorted image 120. As illustrated, the grid in the undistorted (distortion-corrected target) image 110 has straight lines. Throughout the below description, a "source image" refers to a distorted image and a "target image" refers to a corrected image that is a representation of the undistorted image.

As a consequence of correcting distorted images, image lines that need to be buffered in a system random access memory (RAM) (or a dedicated local buffer of a semiconductor hardware (HW), typically referred to as System on Chips (SoCs)), will significantly increase the system cost. The number of image lines that are required to be buffered to obtain the first correct image block (e.g., top-left of an image) is significantly higher even though other image blocks can be processed. Typical implementations wait for all image lines required to obtain the first (top-left) image block instead of servicing them on a first-come, first-served basis. Due to this, local memory required to store buffer lines for the dedicated SoC is significantly higher. Object shapes can also change substantially as they move from one position on the sensor to another. Whilst for many image applications this may not pose a significant problem, it can be an issue for computer vision, as the same object looks different depending upon which area of the camera sensor it is projected to.

When the geometric distortion exceeds an acceptable value (which can depend on the FOV that the camera has), the introduced distortion may be digitally corrected by a remapping process, often implemented in a SoC. FIG. 2 illustrates a simplified representation 200 of known corrective mapping from a distorted image 120 to a distortion-corrected image 220. Usually in the semiconductor HW, image data is divided into a series of grids, typically referred to as tiles 230, where only relevant parts/tiles of the input image are read from external memory (typically dynamic random access memory (DRAM)) into internal memory for correction, instead of the complete image. To remove the geometric distortion, a corrective mapping 215 is obtained using calibration in which each pixel in the output/distortion-corrected image 220 is mapped with a location in the input/distorted image 120. Calibration feeds some highly structured patterns to the camera (mostly a checkerboard pattern) and estimates distortion based on the camera output of these patterns. A considerable calibration data set is provided to available tools, which then output the distortion correction maps/look-up table (LUT) for each pixel in the distortion-corrected image 220 to a pixel in the distorted image 120.

This tile-based approach increases DRAM bandwidth, system cost and the latency of the system. The SoC is able to read the tiles of image lines directly from external memory or an Image Signal Processor (ISP) is able to read the tiles of image lines into a static RAM (SRAM) or dedicated buffer of the Geometric correction SoC.

In existing systems, the correction is done as a backwards mapping by looking for each pixel of the distortion-corrected image (e.g. a target pixel) in the distorted image. Interpolation to the surrounding source pixels can be used to determine the correction. This is a very inefficient approach that requires reading each source pixel many times from the external memory, such as a Double Data Rate (DDR), which artificially extends the required bandwidth required to perform the image processing.

Another approach is to read the tiles of image lines straight from a camera, such as a Mobile Industry Processor Interface - Camera Serial Interface (MIPI-CSI) or image signal processor (ISP) directly into the local system RAM or local buffer of the SoC for processing. However, this can also be demanding on SRAM size.

Accordingly, there is a need for a method and system for distortion correction from a distorted source image to a distortion-corrected target image that requires a reduced memory size.

US Patent, publication number US11270416 discloses a geometric correction system and method for performing geometric correction of a distorted image in an input frame to provide a corrected image in an output frame including a local memory, geometric correction circuitry, a tile reader, and a descriptor memory storing multiple tile descriptors. The tile reader retrieves distorted tile data from the input frame into the local memory for one corrected tile group at a time according to a corresponding tile descriptor. Each tile descriptor identifies distorted tile data to retrieve and distorted tile data to skip from the local memory for the corresponding corrected tile group. The tile descriptor includes a descriptor for each row of local memory area identifying data to be read and data to be skipped for each row. Only the data needed for one or more target tiles is read to reduce memory transfer bandwidth overhead.

### Summary of the invention

The invention is defined by the claims.

The present invention provides a method for distortion correction from a distorted source image to a distortion-corrected target image and image correction system, as described in the accompanying claims. Specific embodiments of the invention are set forth in the dependent claims. These and other aspects of the invention will be apparent from and elucidated with reference to the embodiments described hereinafter.

According to a first aspect, there is provided a method for distortion correction from a distorted source image to a distortion-corrected target image. The method comprises dividing the target image into at least two vertical stripes; dividing each vertical stripe of the at least two vertical stripes into a plurality of target tiles, each target tile having a target tile position comprising an x coordinate of the target tile and a y coordinate of the target tile within the target image. The method further comprises dividing the source image into a plurality of source tiles, each source tile having a source tile position comprising an x coordinate of the source tile and a y coordinate of the source tile within the source image. Each source tile corresponds to a target tile according to a first mapping based on the positions of the tiles. The source tiles are processed to produce a source tile index by: (i) selecting a first source tile of the plurality of source tiles that has a lowest y coordinate value and assigning a first source tile index value to the selected source tile in the source tile index; (ii) selecting a next source tile of the remaining plurality of source tiles that has a next lowest y coordinate value and assigning an incremental source tile index value to that next selected source tile in the source tile index; and (iii) repeating step (ii) until all the source tiles in the source image have been assigned a source tile index value in an ascending order. In some examples, at least one y coordinate value of a first target tile may be higher than a y coordinate value of a second target tile, wherein the first target tile corresponds to a source tile that appears earlier in the ascending order of the source tile index than, say, a corresponding source tile of the second target tile. The method further comprises reading target tiles of a distorted image of at least one vertical stripe; buffering a subsection of the read target tiles of the distorted image in a dedicated buffer; and performing distortion correction of source tiles of the distorted source image by mapping the subsection of source tiles to corresponding buffered subsection of target tiles of at least one vertical stripe, wherein the distortion correction is performed for each target tile in turn according to the source tile index. The target image is the distortion-corrected target image and the source image is the distorted source image. Following a dividing of each vertical stripe of the at least two vertical stripes into a plurality of target tiles, the method may further comprise: determining boundaries of the target image and, in response to the determined boundaries, deducing which target tile belongs to which vertical stripe of the at least two vertical stripes.

The source tile index may also be called a sorted source tile index, or a sorted tile index. The sorting of the source tiles into a source tile index is performed based on an availability of information during processing, for example of lines of image data/tiles as they become available from the camera or other image signal on a first-come, first-served basis. The combined processes of mapping the source tiles to corresponding target tiles and processing the source tiles according to a source tile index allows for distortion correction to be enabled on a first-come, first-served basis during runtime. Thereafter, distortion correction is performed by tile remapping from a source tile to a corresponding target tile based on the first-come, first-served basis.

In some examples, if two source tiles have a same y coordinate value in step (ii), the method may further comprise: selecting a first source tile of the two source tiles that has a lowest x coordinate value and assigning an incremental source tile index value to that first selected source tile in the source tile index: and assigning a next incremental source tile index value to a second source tile in the source tile index.

Source tiles with lower x coordinate values may be available for processing earlier than those with higher x values, so they are assigned a lower index value than source tiles with higher x coordinate values.

In some examples, the method may further comprise determining a target tile look up table (LUT) based on the first mapping from a source tile to a respective target tile; and dividing the target tile LUT into a plurality of LUTs in response to a number of vertical stripes; wherein each LUT indicates source tile coordinate position information for each respective source tile; and wherein each LUT is re-ordered in response to the source tile index. The LUT co-ordinates may be relative to a source tile.

Optionally, the source tile index and the LUT may be determined prior to a runtime and stored in an external memory. The source tile index (e.g. the sorted source tile index) and the LUT may be recalled from the external memory during the runtime.

In some example embodiments, each target tile has a target tile size comprising a width of the target tile and a height of the target tile; and wherein each source tile has a source tile size comprising a width of the source tile and a height of the source tile. The width and height of the tiles can be measured in numbers of pixels in the x and y directions respectively. In some embodiments, the plurality of target tiles may each have a uniform size. The plurality of source tiles may vary in size based on an amount of a distortion of each source tile. Source tiles at the centre of the source image may be larger than source tiles at the edges of the source image. In some embodiments, a source tile is larger than a respective target tile that the source tile maps to.

In some example embodiments, the source image comprises a plurality of pixel rows extending a full width of the source image. During a runtime, a memory stores (e.g. buffers) data corresponding to a subset of the pixel rows for performing the distortion correction to, wherein the subset of pixel rows comprises one or more source tiles. In some examples, the source tiles may have consecutive source tile index values, whilst in other examples the source tiles may have non-consecutive source tile index values. Optionally, the memory that stored the data corresponding to a subset of pixel rows is a circular buffer.

In some example embodiments, source tile processing for distortion correction can be triggered as soon as a predetermined number of pixel rows are filled in the memory (e.g. buffer). This means that it is not required that the whole buffer is filled for the tile distortion correction processing to start.

In some example embodiments, wherein offline processing is performed prior to runtime processing, wherein the method may further comprise determining a worst-case source tile from offline processing, wherein buffering a subsection of the read target tiles of the distorted image in a dedicated buffer comprises buffering a subsection of the read target tiles of the distorted image in a dedicated circular buffer filled with tiles from image lines of a stripe wherein the determined worst-case source tile is arranged to dictate a size of circular buffer lines.

In some example embodiments, the method may further comprise, in response to the determined worst-case source tile: dividing the target image into multiple row segments having a plurality of target tiles of image lines; and adding further image lines to row segments to fit further tiles in a row segment.

In some example embodiments, the method may further comprise adding padding pixels in response to the determined worst-case source tile and wherein the at least one vertical stripe comprises padding tiles obtained from one of: external memory, a camera. This allows the memory to be able to optimally fit more tiles into the memory for processing.

In some example embodiments, the source image may comprise a plurality of pixel rows extending a full width of the source image; wherein the method may further comprise storing data corresponding to a subset of the plurality of pixel rows for performing the distortion correction to, wherein the subset of plurality of pixel rows comprises one or more source tiles. In some example embodiments, the width of the target tiles may be selected based on a memory, e.g., DRAM, burst length. In some example embodiments, each source tile may be associated with a corresponding destination address. In some example embodiments, the source image may be received from one of: an image sensor with a lens having a known distortion, image signalling processor with a lens having a known distortion. The image sensor may be a camera, for example. A source image with the known distortion may be received from the external memory.

The method may further comprise removing redundant data relating to the source image that is not part of any source tile. A total area covered by the plurality of source tile images may be less than the area of the source image.

According to a second aspect, there is provided a system comprising: a lens and an image sensor (or an image signal processor) for acquiring a source image; a memory for storing at least part of the source image and a target image; and a processor configured to carry out the method according to the first aspect.

According to a third aspect, there is provided an automobile comprising a system according to the second aspect.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified known representation of both an undistorted image and of a distorted image due to optical aberrations.
FIG. 2 illustrates a simplified representation of known corrective mapping from a distorted image to a distortion-corrected image.
FIG. 3 illustrates a schematic diagram of a system used for distortion correction on a first come first serve basis and using a precompute a source TILE index table that orders tiles based on availability of the source image tiles, where a LUT and the source TILE index (STI) are split according to a number of vertical stripes and read into SRAM, according to example embodiments.
FIG. 4 illustrates a flow diagram of a method for distortion correction from a distorted source image to a distortion-corrected target image, according to example embodiments.
FIG. 5 illustrates a pictorial representation of dividing a target image into vertical stripes and padding, according to example embodiments.
FIG. 6 illustrates a pictorial representation following dividing a target image where a padding size is based on a worst-case source tile width that goes beyond a vertical Stripe0, according to example embodiments.
FIG. 7 illustrates a pictorial representation following dividing a target image of the source tile information (STI) of each target tile, according to example embodiments.

### Detailed description

Embodiments herein described employ a method that is hereinafter referred to as a first come, first served based on vertical stripes, where instead of buffering all the image lines of a curve in a dedicated buffer before triggering the SoC for processing, the SoC is triggered once but only for a small (few) number of tiles of image lines that are buffered in a dedicated buffer. In this manner the processing of the tiles of image data is started much earlier than standard approaches by buffering in, say, the SRAM memory or local buffers. In addition to this approach, embodiments propose to split the image into a few vertical stripes and store only line buffers of a vertical stripe, thereby reducing the requirement of SRAM/OCRAM for a dedicated SoC significantly, where internal RAM (IRAM) or on-chip RAM (OCRAM) is the address range of RAM that is internal to a central processing unit (CPU) and is used to store local variables, stack and heap. For example, for an image of say 4096x2160 pixels, instead of assigning a 4k line width to the SRAM, examples propose to split the image into vertical stripes and assign, say, only a 2k line width to SRAM and process the image two times consecutively. Embodiments herein described also introduce an approach to precompute a table, which consists of ordering of tiles, this ordering being based on availability of the source tiles, referred to hereinafter as a Source Tile Index (STI). Thus, a number of tiles of image lines that need to be buffered are pre-computed and may be brought from external memory (typically a Double Data Rate (DDR) memory). Embodiments propose to introduce a concept of splitting the LUT (Look Up Table) and Source_TILE index (STI) according to the number of vertical stripes and read into the SRAM instead of reading the entire line. For example, if the image is split into three vertical stripes, the SRAM requirement will be 3x less and the implementation will use three LUTs and STI's to be read for hardware processing. In this manner, it may be possible to process a 16MP resolution (say, 5312x2988 pixel) image, but where the line buffers required would be only of a 2k line width instead of, say, a 5.4k line width. In this manner, it may also be possible to reduce the requirement of DDR Bandwidth whilst reducing the system cost and concurrently reducing latency and increasing the processing speed.

The following detailed description is merely illustrative in nature and is not intended to limit the embodiments of the subject matter or the application and uses of such embodiments. As used herein, the word "example" means "serving as an example, instance, or illustration." Any implementation described herein as an example is not necessarily to be construed as preferred or advantageous over other implementations.

There is described herein a method for distortion correction of an image according to a first come first served basis during runtime which advantageously reduces local memory size requirements and provides improved latency and increased image processing speed. The method is enabled by a unique mapping that allows data to be processed as soon as it becomes available. The method introduces an approach to precompute a table, which consists of ordering of tiles, this ordering being based on availability of the source tiles, a Source Tile Index (STI). Thus, a number of tiles of image lines that need to be buffered are pre-computed and may be brought from external memory (typically a Double Data Rate (DDR) memory). The method also comprises splitting the LUT (Look Up Table) and Source TILE index (STI) according to a number of vertical stripes and read this reduced number of vertical stripes into the SRAM instead of reading the entire line. Using the unique mapping and the first come first serve method and the precomputed table of a reduced number of vertical stripes that are read into the SRAM, improves the overall efficiency of processing distortion correction for an image and advantageously reduces local memory requirements and improves latency. In some examples, it is envisaged that the method may be performed by a system comprising: a lens and an image sensor for acquiring a source image; a memory for storing at least part of the source image and a target image; and a processor configured to carry out the above-described method. In some examples, it is envisaged that an automobile may comprise such a system, and the system comprises a lens and an image sensor for acquiring a source image; a memory for storing at least part of the source image and a target image; and a processor configured to carry out the method according to the example embodiments described herein.

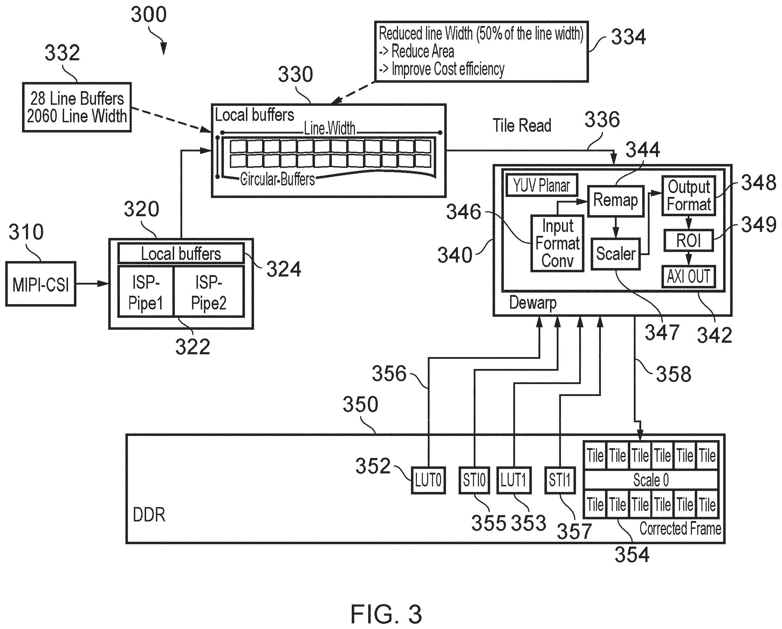

Referring now to FIG. 3, a schematic diagram of a system 300 is illustrated, where the system 300 is used for distortion correction on a first come first serve basis and using a precompute a Source TILE index table that orders tiles based on availability of the source image tiles, where a LUT and the Source TILE index (STI) are split according to a number of vertical stripes and read into SRAM, according to example embodiments. Here, image data is collected at the source image data unit 310. In one example, image data may be received at the source image data unit 310 at low and high exposures, which can then be merged in High Dynamic Range (HDR) inside an image signal processor (ISP) 320. In some examples, the output of the ISP 320 will be red-green-blue (RGB) data (e.g. colour data). Image data, for example from an output of ISP 320 may be stored as tiles of image lines into a local buffer 330.

In an alternative arrangement, the source image data may come from an external memory (e.g. the DDR 350) and be read directly to the local buffer 324 without ISP 320 in between. In the case of smart cameras, ISP may be performed inside the camera and a distorted image is read from the external memory. In this case, there may be only one exposure. In an alternative arrangement, the source image data may come from a camera as the source image data unit 310, which for example may be connected via a camera serial interface, such as a MIPI-CSI-2 Port. Tiles of image lines from the camera are stored in the local memory (not shown). The locally stored image data/tiles is/are then read through an ISP interface 322 and can be stored directly into a dedicated local buffer 330. In some examples, the dedicated local buffer 330 is configured as a circular buffer, which is a data structure that uses a single, fixed-size buffer as if it were connected 'end-to-end'. This structure lends itself easily to buffering data streams, such as for use in the examples described herein. The dedicated local buffer 330 is configured to store a plurality of source tile S_{T} information. The dedicated local buffer 330 comprises a reduced line width 334 with a reduced memory area/size and improved cost efficiency. In this example, the dedicated local buffer 330 configured as a circular buffer has 28 image lines buffered (B) and a 2060-line width (W) 332, which determine the minimum size of the dedicated local buffer 330 during runtime.

A distortion correction processor (referred to herein as a dewarp processor engine 340) is based on the STI0 for Stripe0, and is configured to read 336 the source tile from the circular buffer to the internal RAM of the engine. The Dewarp processor engine 340 reads 356 a first portion of the LUT (LUT0 352) for vertical Stripe0 and based on the LUT0 352, performs remapping 344 of the tile. The dewarp processor engine 340 comprises an input format converter 346 at the input, which helps in converting input format to a YUV/RGB planar format for internal processing. For example, if the input is YUV420 semi planar, the input format converter converts YUV420 semi planar to YUV444 planar. The dewarp processor engine 340 also comprises an output format converter 348, which helps in converting to different formats. The dewarp processor engine 340 also comprises a tile scaler circuit 347 that, in this example, is configured to perform upto ¼ scaling, it also consists of a region of interest (ROI) 349, with which one can configure ROI on each scale. Once a tile is remapped, it is written out 358 to double data rate (DDR) memory 350 that comprises the LUT 352, 353 and the source tile index, STI, 355, 357.

The dewarp processor engine 340 reads source tiles S_{T} for remapping and distortion correction. The LUT 352, 353 and the source tile index 355, 357 are also read into the dewarp processor engine 340 for performing distortion correction to in a first come first serve method as described above. The dewarp processor engine 340 reads the source tiles into the internal search RAM for remapping 344.

In one example, the distortion correction module may comprise a series of processing modules. The dewarp processor engine 340 reads source tiles for remapping from the local buffer 330 (e.g. a circular buffer) to an internal memory of the dewarp processor engine 340. Information retrieved from a source tile index 355, 357 determines which source tile is to be read from the local buffer 330 to the internal memory and the target image 354. A source tile in the internal memory may in some examples be converted to planar formats, for example if the input is in a YUV420 semi planar format. Input format converter can up sample YUV420 formats to YUV444 planar formats after input format conversion. Based on information received from the LUT 352, 353 and the source tile index 355, 357, a source tile is remapped 344 and the output is stored in an output RAM of the dewarp processor engine 340. A tile scaler circuit 347 within the dewarp processor engine 340 reads the distortion-corrected tile from the output RAM and performs a downscaling of the tile (e.g. by 50%). For example, if the output RAM has tile size of 32 x 16 pixels, the tile scaler circuit 347 performs a downscaling to, say, a 16 x 8 pixel tile. Once scaling is finished, the output is stored in a scaler memory. An output format converter 348 converts planar formats to other formats such as RGB Interleaved or YUV interleaved or YUV420 semi-planar formats, as required. The converted tile is then written out 358 to the target image 354 at the DDR 350, for example via an Advanced eXtensible Interface (AXI) 342.

During runtime, the system 300 performs distortion correction. To determine a minimum size of the local buffer 330, a calculation may be performed. Firstly, a tallest source tile of the plurality of source tiles is determined. Usually, the biggest (e.g., tallest) source tile is at a centre of the source image. For example, the tallest source tile, for a target tile size of 32 x 16 pixels, is 36 x 20pixels (for a source image having 4MP and 140° FOV) and its location is at (1284, 533) in the source image. This can be described as a "worst case" source tile because it requires the most amount of memory to process distortion correction of. Based on this "worst case" source tile, a size of the line buffers of the local buffer can be decided. In some examples, this line buffer size can be fixed in the external memory and recalled. A checking function can verify if the "worst case" tile fits inside the allocated buffer size. Note that for different size tiles and different distortions and FOV, etc., the minimum memory size will vary.

Based on the tallest source tile data, the source image is divided into several row segments comprising a plurality of pixel rows. A row segment can be defined by the number of pixels across the full width of the source image x the number of pixel rows in height (e.g. height of the tallest tile). For the example described above, for a 32 x 16 pixel target tile having a tallest source tile with a height of 20 pixels, each row segment may have a size (e.g., height) of 20 image lines. In some examples, the row segments may be larger than a height of the tallest tile to be able to optimally fit most of the source tiles into a row segment. The above-mentioned example could have a row segment having a height of 20 image lines ± σ, where σ may be a percentage of the height, a fixed number, etc. For a circular buffer, eight image lines can be held at once, so it may be beneficial for σ to equal eight in this particular example. The row segment calculation defines the minimum size of SRAM (e.g. size of the local buffer 620) allocated to process the whole image. In one example using a circular buffer, for a 2880 x 1600 pixel image, each row segment could be 2880 x 28 lines, where 28 = 20 image lines + 8 image lines.

Each source tile is associated with a corresponding target tile having a destination address according to a first mapping based on the positions of the tiles. This address will have information where the distortion-corrected tile will be stored in the memory (e.g., at the DDR 350). The source tiles are processed to produce a source tile index by: (i) selecting a first source tile of the plurality of source tiles that has a lowest y coordinate value and assigning a first source tile index value to the selected source tile in the source tile index; (ii) selecting a next source tile of the remaining plurality of source tiles that has a next lowest y coordinate value and assigning an incremental source tile index value to that next selected source tile in the source tile index; and (iii) repeating step (ii) until all the source tiles in the source image have been assigned a source tile index value in an ascending order. At least one y coordinate value of a first target tile is higher than a y coordinate value of a second target tile, wherein the first target tile corresponds to a source tile that appears earlier in the ascending order of the source tile index than a corresponding source tile of the second target tile.

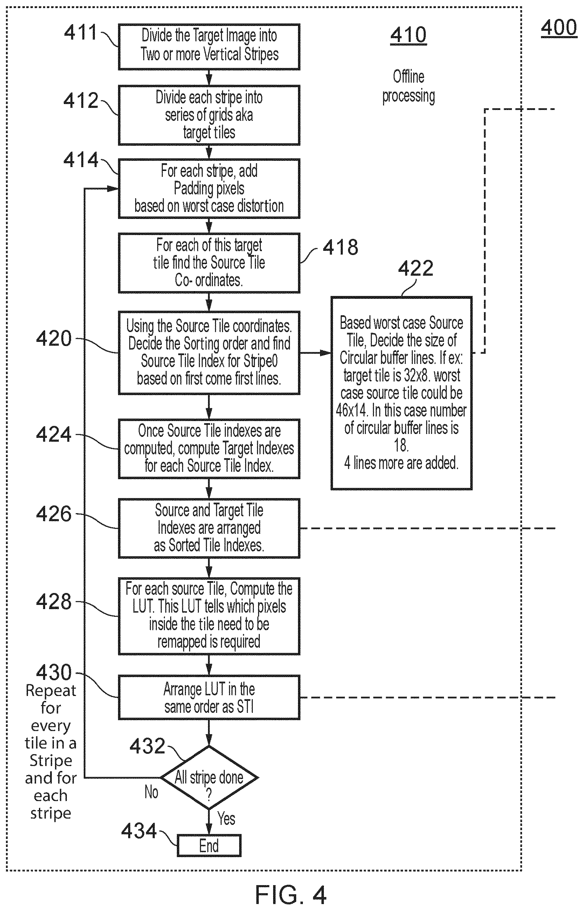

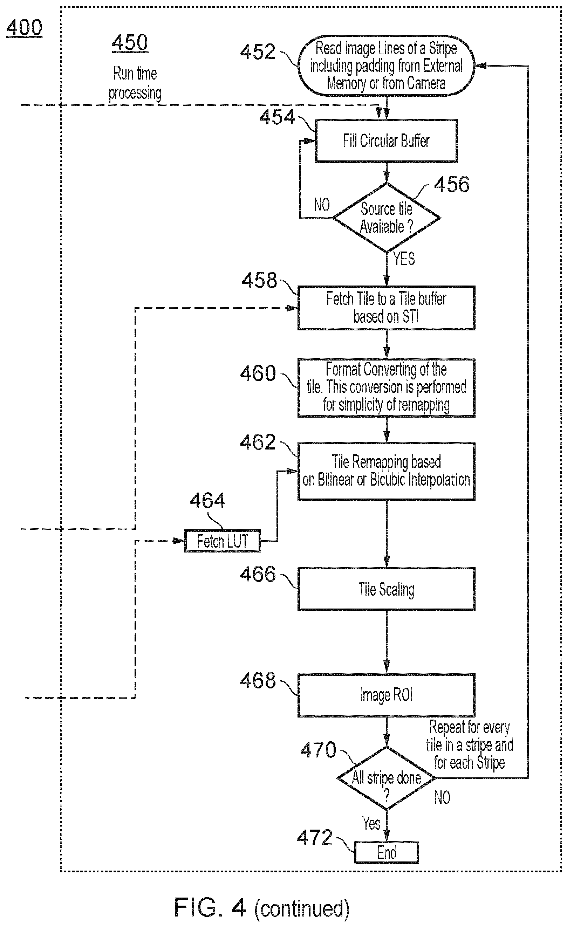

Referring now to FIG. 4, a flow diagram 400 illustrates a method for distortion correction from a distorted source image to a distortion-corrected target image, according to some example embodiments. Flow diagram 400 includes operations 410 to 430 that may be performed as offline processing, i.e., other than as part of the runtime processing and for example that can be calculated prior to runtime. Offline processing may be used to determine which source tiles belongs to which row segment for a known lens distortion, ready for processing of distortion correction to take place. Offline processing may also include determining the LUT 352, 353 and the source tile index (STI) 355, 357 of FIG. 3.

In some examples, offline processing operations may happen on a processor/PC. Offline processing operations determine which source tile belongs to which row segment. Offline processing operations also determine the Source TILE index (STI0 and STI1) and the Look up table (LUT0 and LUT1).

At 411 a target image is first divided into two or more vertical stripes. At 412, each vertical stripe is divided into a series of grids, aka multiple target tiles. The target image is a distortion-corrected version of the source image. Each STI entry comprises information relating to a target tile position within the target image. In some examples, a target image is divided into series of regular grids, referred to as tiles, with tile sizes of, say, 32 x 8 pixels or 64 x 8 pixels (noting that a wide range of alternative tile sizes may be implemented). Different target image sizes and target tile sizes can also be implemented. Target tile size remains uniform across the target tile image. In some examples, the source tiles each have a different size. Larger source tiles sizes are found at the centre of the image, which experience more overall distortion. Source tiles along the edges and in corners of the source image are smaller than those at the centre and experience less distortion due to the curvature of the lens.

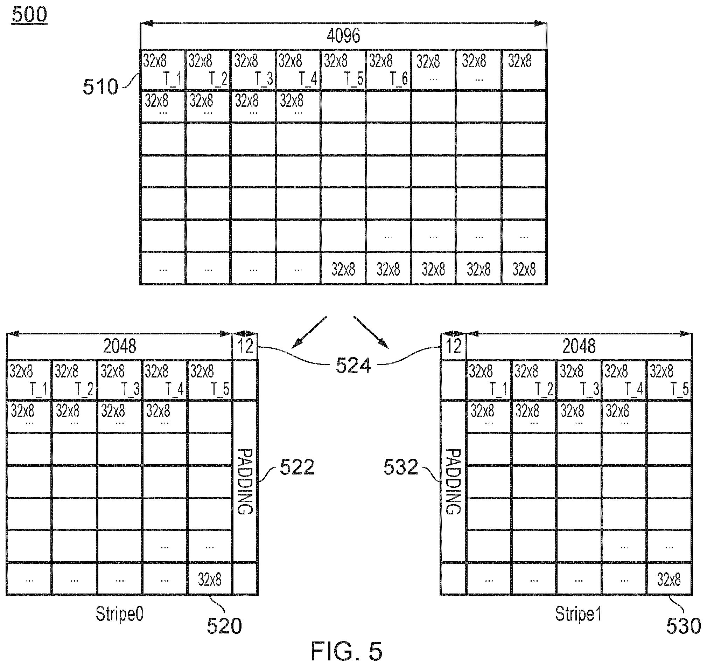

To explain this further and referring to FIG. 5, a pictorial representation of dividing a target image (i.e., distortion-corrected tiles) into vertical stripes and padding is illustrated, according to example embodiments. In the example of FIG. 5, the target image is divided into two vertical stripes, i.e., Stripe0 520 and Stripe1 530. This division of tiles occurs after splitting the image itself, i.e., once the image is split it is possible to know where the boundaries of the image are. Thereafter, based on the boundaries, it is possible to deduce which tile belongs to which Stripe. As illustrated in FIG. 5, target tiles 510 are assigned an identifier, such as T_1, T_2, T_3, etc. Target tiles 510 cover an area defined by: an 'x' coordinate based on a location of the target tile 510 in relation to the target image 500; a 'y' coordinate also based on a location of the target tile 510 in relation to the target image 500; a specified width (e.g., 32 pixels); and a specified height (e.g., 8 pixels). A target tile 510 therefore defines an area according to (x, y, x + width, y + height). Information or data concerning areas of pixels that do not form part of a source tile 410 after identifying the source tiles can be deleted or otherwise disposed of because it will not be used in creating the target image.

Using the described method for processing a distorted source image, where the tiles are processed as soon as they become available, the amount of memory required is reduced, based on calculations of waiting for all the data to be available for the first target tile, say in a top right hand corner of a target image, such as target tile T_1. Instead of waiting for memory to fill up with data, such that image processing of the source image is performed from top to bottom and from left to right, the concepts described herein utilises knowledge of the distortion to trigger data for processing as soon as it becomes available. In one example using a rolling shutter camera, which captures images by exposing each row of pixels sequentially, local memory may be filled line by line with camera data. Using the method provided by the present disclosure can therefore reduce the local memory storage requirements by performing distortion correction to the data as it becomes available.

In some examples, the width of a target tile 510 is selected based on a Dynamic Random Access memory (DRAM) burst length. In DRAM, a burst refers to the number of data transfers that occur in a single read or write operation. The burst length specifies the number of data transfers that will occur in a single operation. For example, the burst length of DDR may be '4' or '8'. Each burst transmits 64 bits of data, or 8 bytes. So, an 8-beat burst in DDR would mean that 8 pieces of data are transferred in a single operation. A source image is divided into a plurality of source tiles, wherein each source tile corresponds to a target tile according to a first mapping. In some examples, one source tile maps to one target tile. In other embodiments this can vary. The first mapping determines how, for each target tile of the target image, a corresponding source tile is found in the source image. The first mapping describes how the data from the source image is taken from the source image and where it maps to in the target image. Each source tile index comprises information relating to a source tile position within the source image.

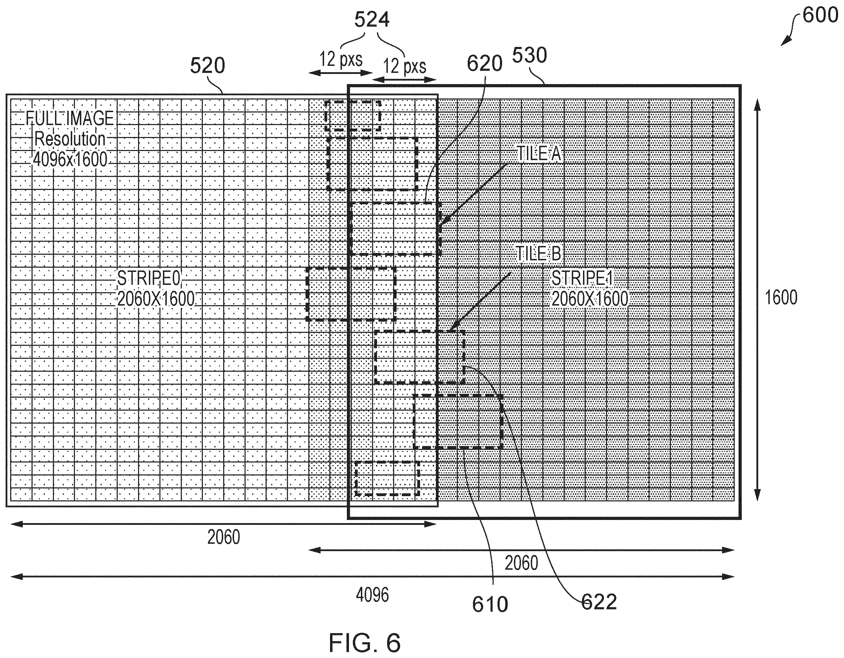

Although this example in FIG. 5 shows the target image being divided into two vertical stripes, a skilled artisan will appreciate that the concepts herein described allow a division into more than two vertical stripes. For each of these vertical stripes, precalculated padding 522, 532 is added, where in the illustrated example 12 pixels 524 are used for padding. In this example, for Stripe0 520, padding 522 is added at the end of Stripe0, whereas for Stripe1 530 padding 532 will be added at the beginning of the Stripe1 530, where Stripe0 520 and Stripe1 530 are treated as two individual images that are read and processed consecutively. In some examples, however, it is envisaged that Stripe0 520 and Stripe1 530 are treated as two individual images that are read and processed concurrently. In some examples (not shown), for example where there are three vertical stripes, a skilled artisan will appreciate that a middle stripe needs to be padded at the beginning of the stripe and at the end of the stripe, Padding may be used because in some instances there may be tiles that can go beyond the stripe0 of the vertical stripe (e.g., TILE A 620 in FIG. 6 that is located between Stripe0 520 and Stripe1 530.

Referring back to FIG. 4, at 414 for each stripe (and in a first iteration Stripe0), padding pixels are added based on a determined worst-case distortion. To explain this further and referring to FIG. 6, a pictorial representation 600 following dividing a target image is illustrated, where a padding size is based on a worst-case source tile width that goes beyond a vertical Stripe0, according to example embodiments. As indicated, in this example, the size of the padding 522, 532 is based on a worst-case source tile width 610 that goes beyond the Stripe0 520. The size of the padding is based on the worst-case source tile width which goes beyond the Stripe0 520 as shown. In this example, an image of resolution 4096x1600 is split into two tiles of 2048x1600, with a padding of 12 pixels 524. The pictorial representation 600 also shows tiles of different sizes in the overlap region, which includes two padding areas 524, thereby totalling 24 pixels. In the offline processing operation, these tiles will be assigned to one of the STIs (Source Tile Index's), either STI0 or STI1, in 420. For example, tile A 620, which is within the Stripe0 520, will be assigned to STI0. TileB 622, which is beyond the Stripe1 530, will be assigned to STI1. In some examples, as would be understood by a skilled artisan, processor or logic may be configured to take care of not duplicating this tile processing during the processing of the two stripes.

Sorting the source tiles into a source tile index comprises: (i) selecting a first source tile of the plurality of source tiles that has a lowest y coordinate value and assigning a first source tile index value (e.g. S_1) to the selected source tile in the source tile index; (ii) selecting a next source tile of the remaining plurality of source tiles that has a next lowest y coordinate value and assigning an incremental source tile index value (e.g. S_2) to that next selected source tile in the source tile index; and (iii) repeating step (ii) until all the source tiles in the source image have been assigned a source tile index value in an ascending order (e.g. S_1, S_2, S_3, S_4, ...) until all the source tiles have been sorted. Once sorted, at least one y coordinate value of a first target tile is higher than a y coordinate value of a second target tile, wherein the first target tile corresponds to a source tile that appears earlier in the ascending order of the source tile index than a corresponding source tile of the second target tile. This means that the order of the source tiles does not correlate to a simple left-to-right, top-to-bottom order, and is instead based on an order defined by a position and a height of the source tile relative to the other source tiles. When the tiles are sorted, a target tile in the middle of the image may be selected and corrected first before an edge tile of a target image in the same row based on an availability of the complete source tile as the source image is captured. Similarly, a tile at the right-hand edge of the source image may be processed before a central tile, or a left-hand tile, if the data is available there first. Accordingly, selection of the tiles for processing is not performed in a raster-like fashion.

Referring back to FIG. 4, at 418, for each current target tile, the process finds the Source Tile Information (STI)/co-ordinates. At 420, using the found source tile co-ordinates, the process decides the sorting order and finds the source tile index (STI) for Stripe0 (in the first iteration) based on a first-come, first served.

Once Source Tile information (STI) is identified for each target tile, source tile needs to be sorted based on last line of each source tile, e.g., height. If two tiles have the same last line (e.g., a same 'y' + 'height' value), then they will be sorted based on the 'x'-coordinate value. The above-described method for sorting the source tiles 410 in the source tile index comprises selecting a first source tile of the two source tiles that has a lowest x coordinate value and assigning an incremental source tile index value to that first selected source tile in the source tile index, and assigning a next incremental source tile index value to a second source tile in the source tile index. If there are more than two tiles with the same last line value, they will all be ordered based on their x-coordinate. Sorting this way, tiles will be indexed at 420 based on their availability in a line-by-line fashion. These sorted indexes will be used for triggering on a first come first serve basis later during processing. Target tile regions (x, y, width, height) for each source tile regions are computed. Computation of the target tile regions for a corresponding source tile region is required as we need to know which co-ordinates the source tile will be re-mapped to, as illustrated below in Table 1 and Table 2. In some examples, Tables 1 and 2 may be precomputed for lenses with known distortion and stored in an external memory (e.g., a DDR) and read by a processor during runtime processing.

Table 1 shows an example of a mapping of a plurality of source tiles to a plurality of target tiles, before sorting, wherein the initial 11 target tiles are aligned along a top row across a target image with a target tiles size of 32 x 16 pixels. As illustrated, the target tiles each have an uniform size, whilst the source tiles each vary in size.

**Table 1: indicates an example of source tile to target tile mapping, before sorting.**

| **Source Tile** | | | | **Target Tile** | | | | |
|---|---|---|---|---|---|---|---|---|
| **X** | **Y** | **Width** | **Height** | | **X** | **Y** | **Width** | **Height** |
| 461 | 237 | 14 | 17 | **T_1** | 0 | 0 | 32 | 16 |
| 470 | 229 | 15 | 17 | **T_2** | 32 | 0 | 32 | 16 |
| 481 | 222 | 15 | 17 | **T_3** | 64 | 0 | 32 | 16 |
| 492 | 215 | 17 | 17 | **T_4** | 96 | 0 | 32 | 16 |
| 504 | 208 | 17 | 17 | **T_5** | 128 | 0 | 32 | 16 |
| 517 | 202 | 18 | 16 | **T_6** | 160 | 0 | 32 | 16 |
| 531 | 195 | 18 | 17 | **T_7** | 192 | 0 | 32 | 16 |
| 546 | 189 | 18 | 16 | **T_8** | 224 | 0 | 32 | 16 |
| 561 | 182 | 19 | 17 | **T_9** | 256 | 0 | 32 | 16 |
| 576 | 176 | 20 | 16 | **T_10** | 288 | 0 | 32 | 16 |
| 592 | 169 | 20 | 17 | **T_11** | 320 | 0 | 32 | 16 |

After sorting, a calculation is made as to which target tile region this will be remapped to. For example, S_1 tile could be remapped to T_5. T_5 tile region information needs to be known in terms of (x, y, width, and height), Table 1 shows the source and target regions of first few tiles in terms of x, y, width, and height for a 4MP 140° FOV image before sorting when using a target tile region of 32x16. Table 2 shows the co-ordinates in terms of (x, y, width, height) after sorting. This table is precomputed and stored in DDR and read during runtime processing. It can be observed from Table 1 that Source Region y-coordinates start at line ~237, whereas after sorting in Table 2, it can be observed that the y-coordinates start at line 23. In this manner, the number of tiles of image lines required to be buffered is much less compared to the traditional approach. Once the number of tiles of image lines to be buffered is determined, this line is divided into few vertical stripes to further reduce the memory required to be buffered.

**Table 2: an equivalent table to that of Table 1, after sorting.**

| **Source Tile/regions** | | | | **Target Tile/regions** | | | |
|---|---|---|---|---|---|---|---|
| **X** | **Y** | **Width** | **Height** | **X** | **Y** | **Width** | **Height** |
| 1397 | 23 | 31 | 12 | 1376 | 0 | 32 | 16 |
| 1428 | 23 | 30 | 12 | 1408 | 0 | 32 | 16 |
| 1337 | 24 | 31 | 12 | 1312 | 0 | 32 | 16 |
| 1367 | 24 | 31 | 11 | 1344 | 0 | 32 | 16 |
| 1458 | 24 | 31 | 11 | 1440 | 0 | 32 | 16 |
| 1488 | 24 | 31 | 12 | 1472 | 0 | 32 | 16 |
| 1307 | 25 | 30 | 13 | 1280 | 0 | 32 | 16 |
| 1519 | 25 | 30 | 12 | 1504 | 0 | 32 | 16 |
| 1549 | 26 | 30 | 12 | 1536 | 0 | 32 | 16 |
| 1277 | 27 | 30 | 13 | 1248 | 0 | 32 | 16 |
| 1579 | 28 | 30 | 12 | 1568 | 0 | 32 | 16 |

At 422, the worst-case source tile, based on the first-come, first-served image lines, is used to decide a size of the circular buffer image lines. Based on the worst-case source tile data, in some examples, the image is divided into several row segments. For example, for 32x16 target tile, each row segment has a size of 28 lines. In some examples, this may be calculated based on the worst-case source tile height of 20 image lines and adding few more image lines to optimally fit most tiles in a row segment. This defines the minimum size of SRAM allocated to process the whole image. For example, for a 4096x1600 image, each row segment would be divided into two vertical stripes of 2060x28 image lines. For example, if the target tile is 32*8 pixels, the worst-case source tile could be 46*14 pixels. In this illustrated example case, a number of circular buffer tiles may be set at 18, with 4 more image lines added. This information is passed to an on-line processing operation 450.

Additionally at 424, and continuing with the off-line processing, once the STIs are computed, the process computes the target indexes for each STI. At 426, the STIs and target tile indexes (TTls) (target tile coordinate information) are arranged as source tile indexes, which also contain the information of Target Tile regions for each source tile regions.

After sorting the source tiles into the source tile index, an ascending order ensures that a first source tile in the source tile index, for example tile S_1, is the source tile that has the lowest y coordinate of all the source tiles of the source image. In one example, the source tiles are sorted based on a final line of the source tile, defined by `y + height' of the source tiles. The order of the source tiles in the source tile index according to an ascending order defines an order of availability of each of the source tiles during a runtime.

Data is buffered from the top left-hand corner of the source image to the bottom right-hand corner of the source image. All the data for the first source tile, S_1, will be available before any of the other source tiles. Similarly, data for source tile S_2 will be available next, after S_1. Data for source tile S_3 will be available after S_2, and so on until all the data is available. Due to the distortion caused by the lens which takes the source image, the first source tile that becomes available is not the topmost left-hand corner source tile or the tile that maps to the topmost left-hand corner of the target image. Instead, the source tile that appears first in the source tile index (S_1) is in the top-centre of the source image.

With sorting using this approach, source tiles are indexed based on their availability in a line-by-line fashion. The sorted indexes are used for distortion correction of the source tiles on a first come first serve basis during processing, i.e., during a runtime at 450. Data relating to the source image received from an image sensor or image processing signal is collected in a raster fashion.

For example, and referring to FIG. 6, the STI for Tile A 620 dewarped tile output will be written out to DDR while processing of Stripe0 520 and the STI for Tile B 622 dewarped tile output will be written out to DDR while processing of Stripe1 530. At 428, for each source tile, the LUT is computed. This computed LUT identifies the pixels inside the tile that need to be re-mapped. Each source tile will be associated with the corresponding destination address. This address will have information where the distortion-corrected tile will be stored in the memory. At 430, the LUT is (re-) arranged to be in the same order as the STI. At 432, a decision is made as to whether all vertical stripes have been processed. If, at 432, all vertical stripes have not been processed, the process then loops back to 414 and is repeated for each tile. If, at 432, all vertical stripes have been processed, the off-line processing ends at 434.

Flow diagram 400 includes image processing operations 450 to 470 that may be calculated during runtime. The runtime image processing 450 commences at 452 by reading image lines of a Stripe (including padding from external memory or from a camera, say). At 454, a circular buffer is filled from the image lines of a Stripe read at 452 and based on the worst-case source tile from the offline processing 410 that dictates a size of the circular buffer image lines at 422.

Usually, the worst-case source tile is at the centre of the image. For example, the worst-case source tile for a target tile of 32x16 is 36x20 (for 4MP 140° FOV) and its location is at (1284, 533). This worst-case source tile is required because based on this worst-case source tile, a size of the circular buffer image lines is decided/dictated. This line buffer size is fixed in the memory. In some examples, a checking function may be configured to verify whether (or not) the worst-case tile fits inside the allocated buffer size. Thus, during a runtime, a maximum number of image lines (e.g., defined by the row segments) that need to be buffered at the circular buffer (e.g., local buffer 330 from FIG. 3) can be based on offline processing calculations. At 456, a determination is made as to whether a source tile is available, and if not the process loops back to 454 until filled.

If a source tile is available at 456, at 458 tiles are fetched to a tile buffer based on the STI with STIs and target tile indexes (TTls) arranged as source tile indexes as an input from 426. For each of these target tiles, information on which pixels inside the tile need to be remapped is required. For that for each of the target tiles, assign it corresponding LUT which will contain the mapping from source tile to target tile. This LUT will contain index that are relative with its own source tile, as illustrated in Table 3 and Table 4. Thus, during the runtime, a maximum number of image lines that may be buffered will be based on the offline calculation 410. In examples described herein, the sorted source tile index input from 426 may be used to trigger tiles on a first-come, first-served basis. From the sorted list, the process may be configured to wait until the required image lines of the first source tile are available in the circular buffer, after which the process can be triggered for a correction of first tile. As soon as required, the image lines for the second source tile are made available in the SRAM and the second source tile will be processed.

For example, as shown in example above S_1, S_2, S_3, S_4, S_5 will be processed one after another. This Source Tile Index is either stored inside the dewarp processor or read from external memory (e.g., DRAM).

In some examples, using the above first-come, first-served approach, source tiles are processed in a non-linear manner, despite pixel data being buffered in a linear manner (e.g. by a raster scan). The first few tiles that will be buffered for distortion correction are typically in the top centre of the source image. After the mid-way point of the source image, the processed tiles generally occur from the edges in towards the middle of the source image due to the ascending order of the sorted source tiles in the source tile index. Target tiles at a left-hand edge are typically processed before the right-hand edge tiles having a same y-coordinate value, as they have a lower x-coordinate and will be made available in the local memory before those on a right-hand edge.

Table 3 shows an example of a section of a target tile look-up-table (LUT) wherein each entry indicates a pixel location (x, y) to retrieve information from a corresponding source tile to.

**Table 3:**

| **Target Tile Look Up Table** | | | |
|---|---|---|---|
| **3,0** | **4,0** | **5,0** | **6,0** |
| **2,1** | **3,1** | **4,1** | **5,1** |
| **2,2** | **3,2** | **4,2** | **5,2** |
| **1,3** | **2,3** | **3,3** | **4,3** |
| **1,4** | **2,4** | **3,4** | **4,4** |
| **0,5** | **1,5** | **2,5** | **3,5** |
| **0,6** | **1,6** | **2,6** | **3,6** |
| **0,7** | **1,7** | **2,7** | **3,7** |

Table 4 illustrates a section of a source tile having coordinates (x, y) of each pixel within said source tile. Mapping of the pixels to the LUT illustrated in Table 3 is shown using **bold.** In one example, the source tile is the S_1 source tile, having a Source Tile index of (X, Y, Width, Height = 461, 237, 14, 17). The LUT may be based on this source tile index. The target tile LUT of Table 3 shows remapping information of each pixel in the corresponding source tile of Table 4. In this example, Pixel (0,0) of Target Tile LUT contains (3,0) which means that target tile pixel (0,0) will be fetched from Pixel (3,0) of the source tile of Table 4. This translates to an absolute address of (461 + 3), (237,0). This mapping is known for each source tile 410 in the target tile LUT. Put simply, the look-up-table indicates which pixels of the source tile are the required pixels for the corresponding target tile.

**Table 4.**

| **Source Tile** | | | | | | | |
|---|---|---|---|---|---|---|---|
| 0,0 | 1,0 | 2,0 | **3,0** | **4,0** | **5,0** | **6,0** | 7,0 |
| 0,1 | 1,1 | **2,1** | **3,1** | **4,1** | **5,1** | 6,1 | 7,1 |
| 0,2 | 1,2 | **2,2** | **3,2** | **4,2** | **5,2** | 6,2 | 7,2 |
| 0,3 | **1,3** | **2,3** | **3,3** | **4,3** | 5,3 | 6,3 | 7,3 |
| 0,4 | **1,4** | **2,4** | **3,4** | **4,4** | 5,4 | 6,4 | 7,4 |
| **0,5** | **1,5** | **2,5** | **3,5** | 4,5 | 5,5 | 6,5 | 7,5 |
| **0,6** | **1,6** | **2,6** | **3,6** | 4,6 | 5,6 | 6,6 | 7,6 |
| **0,7** | **1,7** | **2,7** | **3,7** | 4,7 | 5,7 | 6,7 | 7,7 |
| 0,8 | 1,8 | 2,8 | 3,8 | 4,8 | 5,8 | 6,8 | 7,8 |

For example, S_1 source tile will have Source Tile index of (X, Y, Width, Height = 461, 237, 14, 17). LUT will be based on these source Tile index. For example, the Target tile (LUT) shows remapping information of each pixel. In this example, Pixel (0,0) of *Target Tile (LUT)* contains (3,0) which means that target tile pixel (0,0) will be fetched from Pixel (3,0) of source tile which translates to absolute address of (461 + 3), (237,0). Furthermore, in the vertical stripe concept this LUT is divided into more than one table (LUT) based on the number of vertical stripes. For example, if there is Stripe0 and Stripe1, LUT will be LUT0 and LUT1.

The sorted STI (e.g., STI 355, 357 from FIG. 3) may be used to trigger tiles for distortion correction based on a first come first serve basis. From the sorted list, the process waits until the required number of image lines of a first (or subsequent) source tile are available in the circular buffer, after which the process may trigger a correction of a first (or subsequent) source tile. As soon as the required number of image lines for the second source tile to be distortion-corrected are available in the circular buffer, the second source tile will be processed. For example, source tiles S_1, S_2, S_3, S_4, S_5 will be processed one after another. The Sorted Source Tile Index can either be stored inside the HW memory or read from external memory (e.g., DRAM).

At 460, the convention of the processed tile is formatted. At 462, the tile re-mapping is based on bilinear or bicubic interpolation, with input fetched at 464 from the LUT, containing the information of Target Tile regions for each source tile region, having been (re-) arranged to be in the same order as the STI at 430. At 466, tile scaling is performed. At 468, an image ROI is achieved. At 470, a decision is made as to whether all vertical stripes have been processed. If, at 470, all vertical stripes have not been processed, the process then loops back to 452 and is repeated for every tile in a stripe and for each vertical stripe. If, at 470, all tiles and all vertical stripes have been processed, the on-line processing ends at 472.

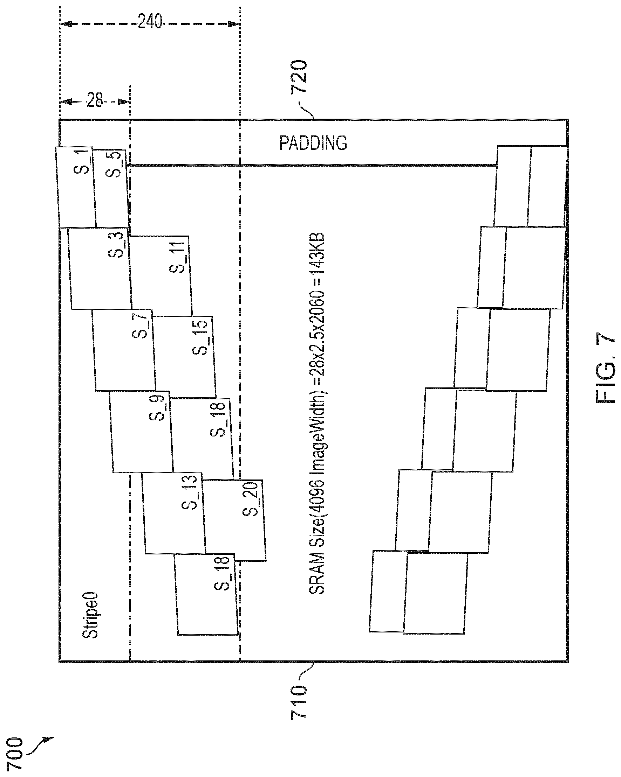

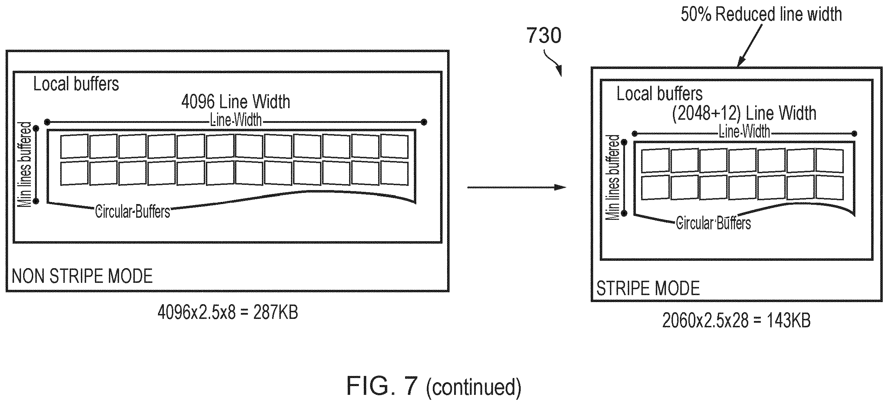

Referring now to FIG. 7, a pictorial representation 700 following dividing a target image of the source tile information (STI) of each target tile is illustrated, according to example embodiments. FIG. 7 illustrates an SRAM requirement for a stripe0 tile 710 with padding 720.

FIG. 7 also illustrates the improvement provided by the vertical stripe approach, over and above the pure 'first come first served' approach. For example, let us assume an image with an image resolution of 4096x1600 @ 140° FOV lens; here, the memory required using solely the 'first come first served' approach will be reduced from 2.45Mbytes to 280Kbytes (4096 x 2.5 Bytes pp x 28). However, when using the described approach of processing the tiles as soon as they are available ('first come first served') but based on the aforementioned vertical stripes approach, a significantly reduced memory requirement 730 may be achieved (as a consequence of a reduction in line width), reduced from 2.45Mbytes to 143Kbytes (2060 x 2.5 Bytes pp x 28) as shown in FIG. 7.

The present disclosure is suited for all camera-based products that benefit from distortion correction. In particular, the method described above may be used in automobiles in systems such as camera-based Driver Cabin monitoring, Rear View Camera system, Passenger monitoring and Advanced Driver Assistance Systems. Use cases include: in front camera systems, surround view systems, rear-view camera systems, driver monitoring camera systems, etc. Of course, the method can also be applied to other applications.

In the foregoing specification, the invention has been described with reference to specific examples of embodiments of the invention. It will, however, be evident that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example in one embodiment, the illustrated examples may be implemented as circuitry located on a single integrated circuit or within a same device. In some examples, the various components within the dewarp processor can be realized in discrete or integrated component form, with an ultimate structure therefore being an application-specific or design selection. As the illustrated embodiments of the present invention may, for the most part, be implemented using electronic components and circuits known to those skilled in the art, details will not be explained in any greater extent than that considered necessary as illustrated below, for the understanding and appreciation of the underlying concepts of the present invention and in order not to obfuscate or distract from the teachings of the present invention. A skilled artisan will appreciate that the level of integration of processor circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the invention is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method for distortion correction from a distorted source image to a distortion-corrected target image, the method comprising:
dividing (411) a target image into at least two vertical stripes;
dividing (412) each vertical stripe of the at least two vertical stripes into a plurality of target tiles, each target tile having a target tile position comprising an x, horizontal, coordinate of the target tile and a y, vertical, coordinate of the target tile within the target image;
dividing the distorted source image into a plurality of source tiles, each source tile having a source tile position comprising an x coordinate of the source tile and a y coordinate of the source tile within the source image,
wherein each target tile has a target tile size comprising a width of the target tile and a height of the target tile; and wherein each source tile has a source tile size comprising a width of the source tile and a height of the source tile, wherein the plurality of target tiles each have a uniform size; and the plurality of source tiles vary in size based on an amount of a distortion of each source tile
wherein each source tile corresponds to a target tile according to a first mapping based on the positions of the tiles;
processing (420) the source tiles to produce a source tile index by:
(i) selecting a first source tile of the plurality of source tiles that has a lowest y coordinate value and assigning a first source tile index value to the selected source tile in the source tile index;
(ii) selecting a next source tile of the remaining plurality of source tiles that has a next lowest y coordinate value and assigning an incremental source tile index value to that next selected source tile in the source tile index; and
(iii) repeating step (ii) until all the source tiles in the source image have been assigned a source tile index value in an ascending order;
reading (452) pixels of a distorted image of at least one vertical stripe, row by row;
buffering (454) a subsection of the read pixels, including at least one source tile, of the distorted
image in a dedicated buffer; and
performing distortion correction (462) of the buffered source tiles of the distorted source image by mapping each source tiles to a corresponding target tile of at least one vertical stripe, wherein the distortion correction is performed for each target tile in turn according to the source tile index.

2. The method of claim 1, wherein following dividing each vertical stripe of the at least two vertical stripes into a plurality of target tiles, the method further comprises: determining boundaries of the target image and in response to the determined boundaries, deducing which target tile belongs to which vertical stripe of the at least two vertical stripes.

3. The method of claim 1 or claim 2, wherein if two source tiles have a same y coordinate value in step (ii), the method further comprises:
selecting a first source tile of the two source tiles that has a lowest x coordinate value and assigning an incremental source tile index value to that first selected source tile in the source tile index; and
assigning a next incremental source tile index value to a second source tile in the source tile index.

4. The method of any preceding claim, further comprising:
determining a target tile look up table, LUT, based on the first mapping from a source tile to a respective target tile; and
dividing the target tile LUT into a plurality of LUTs in response to a number of vertical stripes;
wherein each LUT indicates a source tile coordinate position information for a respective source tile; and
wherein each LUT is re-ordered in response to the source tile index.

5. The method of claim 4, wherein the source tile index and each LUT are determined priorto runtime processing and stored in an external memory; and wherein the source tile index and each LUT are recalled from the external memory during the runtime.

6. The method of claim 5, wherein offline processing is performed prior to runtime processing, wherein the method further comprises determining a worst-case source tile from offline processing, wherein buffering a subsection of the read target tiles of the distorted image in a dedicated buffer comprises buffering a subsection of the read target tiles of the distorted image in a dedicated circular buffer filled from image lines of a stripe wherein the determined worst-case source tile is arranged to dictate a size of circular buffer lines.

7. The method of claim 6, further comprising:
dividing the target image into multiple row segments having a plurality of target tiles of image lines; and
adding further image lines to row segments to fit further tiles in a row segment.

8. The method of claim 6 or claim 7, further comprising adding padding pixels in response to the determined worst-case source tile and wherein the at least one vertical stripe comprises padding tiles obtained from one of: external memory, a camera.

9. The method of any preceding claim, wherein the source image comprises a plurality of pixel rows extending a full width of the source image; the method further comprising storing, data corresponding to a subset of the plurality of pixel rows for performing the distortion correction to, wherein the subset of plurality of pixel rows comprises one or more source tiles.

10. The method of claim 9, further comprising determining a minimum memory size for storing the subset of pixel rows for processing comprising:
determining a tallest source tile based on height information of the plurality of source tiles; and
calculating a minimum memory size by multiplying a height of the tallest source tile by a memory required to store one pixel row.

11. The method of any of claims 9 to 10, wherein the width of the target tiles is selected based on a memory burst length.

12. The method of any preceding claim, wherein the source image is received from one of: an image sensor comprising a lens having a known distortion; an image signalling processor comprising a lens having a known distortion.

13. A system comprising:
a lens and an image sensor for acquiring a source image;
a memory for storing at least part of the source image and a target image; and
a processor configured to carry out the method according to any of claims 1 to 12.

14. An automobile comprising a system according to claim 13.

## Patentansprüche

1. Verfahren zur Verzerrungskorrektur von einem verzerrten Quellbild zu einem verzerrungskorrigierten Zielbild, das Verfahren umfassend:
Aufteilen (411) eines Zielbildes in mindestens zwei vertikale Streifen;
Teilen (412) jedes vertikalen Streifens der mindestens zwei vertikalen Streifen in eine Vielzahl von Zielkacheln, wobei jede Zielkachel eine Zielkachelposition aufweist, umfassend eine horizontale x-Koordinate der Zielkachel und eine vertikale y-Koordinate der Zielkachel innerhalb des Zielbildes;
Aufteilen des verzerrten Quellbildes in eine Vielzahl von Quellkacheln, wobei jede Quellkachel eine Quellkachelposition aufweist, umfassend eine x-Koordinate der Quellkachel und eine y-Koordinate der Quellkachel innerhalb des Quellbildes,
wobei jede Zielkachel eine Zielkachelgröße aufweist, umfassend eine Breite der Zielkachel und eine Höhe der Zielkachel; und wobei jede Quellkachel eine Quellkachelgröße aufweist, umfassend eine Breite der Quellkachel und eine Höhe der Quellkachel, wobei die Vielzahl von Zielkacheln jeweils eine einheitliche Größe aufweist; und wobei die Vielzahl von Quellkacheln in ihrer Größe basierend auf einem Ausmaß einer Verzerrung jeder Quellkachel variiert,
wobei jede Quellkachel einer Zielkachel gemäß einer ersten Abbildung basierend auf den Positionen der Kacheln entspricht;
Verarbeiten (420) der Quellkacheln, um einen Quellkachelindex zu erzeugen durch:
(i) Auswählen einer ersten Quellkachel der Vielzahl von Quellkacheln, die einen niedrigsten y-Koordinatenwert aufweist, und Zuweisen eines ersten Quellkachelindexwerts zu der ausgewählten Quellkachel in dem Quellkachelindex;
(ii) Auswählen einer nächsten Quellkachel der übrigen Vielzahl von Quellkacheln, die einen nächstniedrigsten y-Koordinatenwert aufweist, und Zuweisen eines nächsthöheren Quellkachelindexwerts zu der nächsten ausgewählten Quellkachel in dem Quellkachelindex; und
(iii) Wiederholen von Schritt (ii), bis allen Quellkacheln in dem Quellbild ein Quellkachelindexwert in aufsteigender Reihenfolge zugewiesen wurde;
Auslesen (452) von Pixeln eines verzerrten Bildes von mindestens einem vertikalen Streifen, Zeile für Zeile;
Puffern (454) eines Unterabschnitts der ausgelesenen Pixel, einschließlich mindestens einer Quellkachel, des verzerrten Bildes in einem dedizierten Puffer; und
Durchführen einer Verzerrungskorrektur (462) der gepufferten Quellkacheln des verzerrten Quellbildes durch Abbilden jeder Quellkachel auf eine entsprechende Zielkachel mindestens eines vertikalen Streifens, wobei die Verzerrungskorrektur für jede Zielkachel wiederum gemäß dem Quellkachelindex durchgeführt wird.

2. Verfahren nach Anspruch 1, wobei nach dem Aufteilen jedes vertikalen Streifens der mindestens zwei vertikalen Streifen in eine Vielzahl von Zielkacheln das Verfahren ferner umfasst: Bestimmen von Grenzen des Zielbildes und als Reaktion auf die bestimmten Grenzen Ableiten, welche Zielkachel zu welchem vertikalen Streifen der mindestens zwei vertikalen Streifen gehört.

3. Verfahren nach Anspruch 1 oder 2, wobei, falls zwei Quellkacheln in Schritt (ii) denselben y-Koordinatenwert aufweisen, das Verfahren ferner umfasst:
Auswählen einer ersten Quellkachel der zwei Quellkacheln, die einen niedrigsten x-Koordinatenwert aufweist, und Zuweisen eines nächsthöheren Quellkachelindexwerts zu der ersten ausgewählten Quellkachel in dem Quellkachelindex; und
Zuweisen eines nächsthöheren Quellkachelindexwerts zu einer zweiten Quellkachel im Quellkachelindex.

4. Verfahren nach einem der vorstehenden Ansprüche, ferner umfassend:
Bestimmen einer Zielkachel-Nachschlagetabelle (LUT) basierend auf der ersten Abbildung von einer Quellkachel auf eine jeweilige Zielkachel; und
Aufteilen der Zielkachel-LUT in eine Vielzahl von LUTs als Reaktion auf eine Anzahl vertikaler Streifen;
wobei jede LUT Quellkachel-Koordinatenpositionsinformationen für eine jeweilige Quellkachel angibt; und
wobei jede LUT als Reaktion auf den Quellkachelindex umgeordnet wird.

5. Verfahren nach Anspruch 4, wobei der Quellkachelindex und jede LUT vor der Laufzeitverarbeitung bestimmt und in einem externen Speicher gespeichert werden; und wobei der Quellkachelindex und jede LUT während der Laufzeit aus dem externen Speicher abgerufen werden.

6. Verfahren nach Anspruch 5, wobei Offline-Verarbeitung vor einer Laufzeitverarbeitung durchgeführt wird, wobei das Verfahren ferner das Bestimmen einer Worst-Case-Quellkachel aus Offline-Verarbeitung umfasst, wobei das Puffern eines Unterabschnitts der ausgelesenen Zielkacheln des verzerrten Bildes in einem dedizierten Puffer das Puffern eines Unterabschnitts der ausgelesenen Zielkacheln des verzerrten Bildes in einem dedizierten Ringpuffer umfasst, der aus Bildzeilen eines Streifens gefüllt ist, wobei die bestimmte Worst-Case-Quellkachel dazu ausgelegt ist, eine Größe von Ringpufferzeilen vorzugeben.

7. Verfahren nach Anspruch 6, ferner umfassend:
Aufteilen des Zielbildes in mehrere Zeilensegmente mit einer Vielzahl von Zielkacheln von Bildzeilen; und
Hinzufügen weiterer Bildzeilen zu Zeilensegmenten, um weitere Kacheln in ein Zeilensegment einzufügen.

8. Verfahren nach Anspruch 6 oder 7, ferner umfassend das Hinzufügen von Füllpixeln als Reaktion auf die bestimmte Worst-Case-Quellkachel und wobei der mindestens eine vertikale Streifen Füllkacheln umfasst, die erhalten werden aus: externem Speicher oder einer Kamera.

9. Verfahren nach einem der vorhergehenden Ansprüche, wobei das Quellbild eine Vielzahl von Pixelzeilen umfasst, die sich über eine volle Breite des Quellbildes erstrecken; das Verfahren ferner umfassend das Speichern von Daten, die einer Teilmenge der Vielzahl von Pixelzeilen entsprechen, um die Verzerrungskorrektur durchzuführen, wobei die Teilmenge der Vielzahl von Pixelzeilen eine oder mehrere Quellkacheln umfasst.

10. Verfahren nach Anspruch 9, ferner umfassend das Bestimmen einer minimalen Speichergröße zum Speichern der Teilmenge von Pixelzeilen zur Verarbeitung, umfassend:
Bestimmen einer höchsten Quellkachel basierend auf Höheninformationen der Vielzahl von Quellkacheln; und
Berechnen einer minimalen Speichergröße durch Multiplizieren einer Höhe der höchsten Quellkachel mit einem Speicher, der zum Speichern einer Pixelzeile erforderlich ist.

11. Verfahren nach einem der Ansprüche 9 bis 10, wobei die Breite der Zielkacheln basierend auf einer Speicherburstlänge ausgewählt wird.

12. Verfahren nach einem der vorhergehenden Ansprüche, wobei das Quellbild empfangen wird von: einem Bildsensor, umfassend eine Linse mit einer bekannten Verzerrung; oder einem Bildsignalprozessor, umfassend eine Linse mit einer bekannten Verzerrung.

13. System, umfassend:
eine Linse und einen Bildsensor zum Erfassen eines Quellbildes;
einen Speicher zum Speichern mindestens eines Teils des Quellbildes und eines Zielbildes; und
einen Prozessor, dazu ausgelegt, das Verfahren nach einem der Ansprüche 1 bis 12 auszuführen.

14. Automobil, umfassend ein System nach Anspruch 13.

## Revendications

1. Procédé de correction de distorsion d'une image source déformée à une image cible dont la distorsion est corrigée, le procédé comprenant les étapes suivantes :
découper (411) une image cible en au moins deux bandes verticales ;
diviser (412) chaque bande verticale des au moins deux bandes verticales en une pluralité de tuiles cibles, chaque tuile cible ayant une position de tuile cible comprenant une coordonnée x horizontale de la tuile cible et une coordonnée y verticale de la tuile cible dans l'image cible ;
diviser l'image source déformée en une pluralité de sources, chaque tuile source ayant une position de tuile source comprenant une coordonnée x de la tuile source et une coordonnée y de la tuile source dans l'image source, où chaque tuile cible a une taille de tuile cible comprenant la largeur de la tuile cible et la hauteur de la tuile cible ; et où chaque tuile source a une taille de tuile source comprenant la largeur de la tuile source et la hauteur de la tuile source, la pluralité de tuiles cibles ayant chacune une taille uniforme ; et la pluralité de tuiles sources ayant une taille variable selon la quantité de distorsion de chaque tuile source où chaque tuile source correspond à une tuile cible selon une première mise en correspondance basée sur les positions des tuiles ;
traiter (420) les tuiles sources pour produire un index de tuiles sources en :
(i) sélectionnant une première tuile source de la pluralité de tuiles sources qui a la valeur de coordonnée y la plus faible et en attribuant une première valeur d'index de tuiles sources à la tuile source sélectionnée dans l'index de tuiles sources ;
(ii) sélectionnant la tuile source suivante de la pluralité restante de tuiles sources qui a la valeur de coordonnée y la plus basse suivante et en attribuant une valeur incrémentielle d'index de tuiles sources à la tuile source suivante sélectionnée dans l'index de tuiles sources ; et
(iii) répétant l'étape (ii) jusqu'à ce que toutes les tuiles sources de l'image source aient reçu une valeur d'index de tuiles sources dans un ordre croissant ;
lire (452) les pixels d'une image déformée d'au moins une bande verticale, ligne par ligne,
placer en mémoire tampon (454) une sous-section des pixels lus, comprenant au moins une tuile source, de l'image déformée dans une mémoire tampon dédiée ; et
exécuter une correction de distorsion (462) des tuiles sources placées en mémoire tampon de l'image source déformée en mettant en correspondance chacune des tuiles sources avec une tuile cible correspondante d'au moins une bande verticale, la correction de distorsion étant effectuée pour chaque tuile cible, tour à tour, en fonction de l'index de tuiles sources.

2. Procédé selon la revendication 1, dans lequel après la division de chaque bande verticale des au moins deux bandes verticales en une pluralité de tuiles cibles, le procédé comprend en outre les étapes suivantes : déterminer des limites de l'image cible et, en réponse aux limites déterminées, déduire quelle tuile cible appartient à quelle bande verticale des au moins deux bandes verticales.

3. Procédé selon la revendication 1 ou la revendication 2, dans lequel, si deux tuiles sources ont une même valeur de coordonnée y dans l'étape (ii), le procédé comprend en outre les étapes suivantes :
sélectionner une première tuile source des deux tuiles sources qui a la valeur de coordonnée x la plus faible et affecter une valeur incrémentielle d'index de tuiles sources à la première tuile source sélectionnée dans l'index de tuiles sources ; et
affecter une valeur incrémentielle suivante de l'index de tuiles sources à une deuxième tuile source dans l'index de tuiles sources.

4. Procédé selon l'une quelconque des revendications précédentes, comprenant en outre les étapes suivantes :
déterminer une table de consultation de tuile cible, LUT, sur la base de la première mise en correspondance d'une tuile source avec une tuile cible respective ; et
diviser la LUT de tuile cible en une pluralité de LUT en réponse à un nombre de bandes verticales ;
où chaque LUT indique des informations de position de coordonnées de tuile source pour une tuile source respective ; et
où chaque LUT est réordonnée en réponse à l'index de tuiles sources.

5. Procédé selon la revendication 4, dans lequel l'index de tuiles sources et chaque LUT sont déterminés avant le traitement d'exécution et stockés dans une mémoire externe ; et dans lequel l'index de tuiles sources et chaque LUT sont rappelés de la mémoire externe pendant l'exécution.

6. Procédé selon la revendication 5, dans lequel un traitement hors ligne est effectué avant le traitement d'exécution, où le procédé comprend en outre la détermination d'une tuile source du pire cas à partir d'un traitement hors ligne, où la mise en mémoire tampon d'une sous-section des tuiles cibles lues de l'image déformée dans un tampon dédié comprend la mise en mémoire tampon d'une sous-section des tuiles cibles lues de l'image déformée dans un tampon circulaire dédié rempli à partir de lignes d'image d'une bande, où la tuile source du pire cas déterminée est agencée pour dicter une taille de lignes de tampon circulaire.

7. Procédé selon la revendication 6, comprenant en outre les étapes suivantes :
diviser l'image cible en plusieurs segments de rangée ayant une pluralité de tuiles cibles de lignes d'image ; et
ajouter des lignes d'image supplémentaires aux segments de ligne pour ajuster d'autres tuiles dans un segment de ligne.

8. Procédé selon la revendication 6 ou la revendication 7, comprenant en outre d'additionner des pixels de remplissage en réponse à la tuile source du pire cas déterminée et où l'au moins une bande verticale comprend des tuiles de remplissage obtenues à partir de l'une parmi une mémoire externe ou une caméra.

9. Procédé selon l'une quelconque des revendications précédentes, dans lequel l'image source comprend une pluralité de rangées de pixels s'étendant sur toute la largeur de l'image source ; le procédé comprenant en outre le stockage de données correspondant à un sous-ensemble de la pluralité de rangées de pixels pour effectuer la correction de distorsion, où le sous-ensemble de la pluralité de rangées de pixels comprend une ou plusieurs tuiles sources.

10. Procédé selon la revendication 9, comprenant en outre de déterminer une taille de mémoire minimale pour stocker le sous-ensemble de lignes de pixels à traiter, ce qui comprend les étapes suivantes :
déterminer la tuile source la plus haute sur la base d'informations de hauteur de la pluralité de tuiles sources ; et
calculer la taille de mémoire minimale en multipliant la hauteur de la tuile source la plus haute par la mémoire requise pour stocker une rangée de pixels.

11. Procédé selon l'une quelconque des revendications 9 et 10, dans lequel la largeur des tuiles cibles est sélectionnée sur la base d'une longueur de salve de mémoire.

12. Procédé selon l'une quelconque des revendications précédentes, dans lequel l'image source est reçue de l'un parmi : un capteur d'image comprenant une lentille ayant une distorsion connue ; un processeur de signalisation d'image comprenant une lentille ayant une distorsion connue.

13. Système comprenant :
une lentille et un capteur d'image pour acquérir une image source ;
une mémoire pour stocker au moins une partie de l'image source et une image cible ; et
un processeur configuré pour mettre en œuvre le procédé selon l'une quelconque des revendications 1 à 12.

14. Automobile comprenant un système selon la revendication 13.
